# EUROPÄISCHE PATENTANMELDUNG

(11) **EP 4 786 392 A1**
(43) Veröffentlichungstag der Anmeldung: **05.08.2026**
(21) Anmeldenummer: 25154612.3
(22) Anmeldetag: 29.01.2025
(51) Int. Cl.: B65H 31/30

(54) **VORRICHTUNG ZUM FÖRDERN UND ABSETZEN VON STAPELN AUS FALZPRODUKTEN UND ENTSPRECHENDES SYSTEM**

(71) Anmelder: Heidelberger Druckmaschinen AG, 69115 Heidelberg (DE)
(72) Erfinder: Dr. Neeb, Steffen, 64625 Bensheim (DE); Demir, Suat, 69190 Walldorf (DE); Östreicher, Michael, 69214 Eppelheim (DE); Leonhardt, Holger, 74909 Meckesheim (DE); Dr. Maier, Stefan, 69234 Dielheim (DE); März, Ralf, 74918 Angelbachtal (DE); Knöbl, Dominik, 74918 Angelbachtal (DE)

(57) **Zusammenfassung**

Eine erfindungsgemäße Vorrichtung zum Fördern und Absetzen von Stapeln aus Falzprodukten, mit einem Fördermittel (3), welches aufeinander folgende Stapel (2) von einer vorgeordneten Falzmaschine (41) übernimmt und in eine horizontale Förderrichtung (4a) fördert, mit einem Roboter (10), welcher einen Roboterarm (11) und einen daran angeordneten Greifer (11a) für die Stapel (2) umfasst und welcher die Stapel (2) nacheinander in einem Abhebebereich (7) des Fördermittels (3) einzeln greift, vom Fördermittel (3) abhebt, zu einer Absetzposition (20) bewegt und dort absetzt, und mit einem Rechner (53), welcher das Bewegen des Roboterarms (11) und das Greifen des Greifers (11a) steuert, zeichnet sich dadurch aus, dass am Fördermittel (3) ein distanzmessender erster Sensor (50) in einem dem Abhebebereich (7) vorgeordneten Einlaufbereich (6a) angeordnet ist, welcher im Normalbetrieb der Vorrichtung (1) den Abstand (52) jedes am ersten Sensor (50) vorbei geförderten Stapels (2) misst und damit die Stapelposition in Querrichtung zur Förderrichtung (4a) erfasst und diese an den Rechner (53) übermittelt, und dass der Rechner (53) das Bewegen des Roboterarms (11) und das Greifen des Greifers (11a) unter Verwendung der jeweiligen Stapelposition derart anpasst, dass die Stapel (2) an ihrer jeweiligen Stapelposition gegriffen und abgehoben werden. Die Erfindung ermöglicht es in vorteilhafter Weise, Stapel übereinanderliegender Druckprodukte einem horizontalen Fördermittel fehlerfrei zuzuführen und von dem Fördermittel fehlerfrei abzuheben. Die Erfindung kommt z.B. im Bereich der Auslage von Falzmaschinen zum Einsatz.

## Beschreibung

### Erfindung

Die Erfindung betrifft eine Vorrichtung zum Fördern und Absetzen von Stapeln aus Falzprodukten nach Anspruch 1 und ein System nach Anspruch 8.

### Gebiet der Technik

Die Erfindung liegt auf dem technischen Gebiet der grafischen Industrie und dort insbesondere im Bereich des Handhabens (z.B. Greifen, Bewegen und Absetzen) von Stapeln aus übereinander liegenden, flexiblen und gefalzten flachen Produkten wie z.B. Falzbogen, bevorzugt aus Papier, Karton, Pappe, Kunststoff oder Verbundmaterial, mit einem Manipulator, insbesondere einem Roboter mit Roboterarm und Greifer für die Stapel, wobei die Stapel von einem horizontalen Fördermittel abgehoben werden.

### Stand der Technik

Es ist im Bereich der Druckweiterverarbeitung (Postpress) bereits bekannt, Stapel von flächigen Produkten auf einem horizontalen (z.B. Rollen-) Fördermittel zu transportieren, die Stapel mittels eines an einem Roboterarm angeordneten Greifers zu erfassen, von dem Fördermittel abzuheben, zu einer in der Nähe des Fördermittels befindlichen Palette zu bewegen und dort abzusetzen, z.B. aus der DE 10 2023 127 584 B3, welche eine gattungsgemäße Vorrichtung gemäß dem Oberbegriff von Anspruch 1 offenbart.

Beim Abheben der Stapel mittels des robotergeführten Greifers können Fehler auftreten, wenn die Stapel in Querrichtung zur Förderrichtung nicht ausreichend präzise ausgerichtet sind. Um die Ausrichtung zu gewährleisten, kann im Einlaufbereich eines horizontalen Fördermittels eine Fläche zum seitlichen Ausrichten der Stapel, zum Beispiel ein seitlich angeordnetes Anlageblech, vorgesehen sein. Handelt es sich um ein mobiles Fördermittel und wird das Fördermittel wahlweise beim Ausleger einer Falzmaschine eingesetzt, so ist es weiterhin erforderlich, das Fördermittel korrekt zum Ausgabebereich des Auslegers zu platzieren und auszurichten, sodass die ausgegebenen Stapel an das seitliche Blech gelangen. Solches Vorgehen erfordert vom Bediener achtsames Arbeiten und kostet entsprechend Zeit. Trotzdem können Fehler nicht immer ausgeschlossen werden.

Die Heidelberger Druckmaschinen AG vertreibt eine gattungsgemäße Vorrichtung gemäß Oberbegriff von Anspruch 1 unter der Bezeichnung "Stackstar C". Diese Vorrichtung ist symmetrisch ausgelegt, was bedeutet, dass sie wahlweise mit ihren einen oder anderen Ende des Fördermittels an eine vorlagerte Maschine, in der Regel eine Falzmaschine, zur Stapelübernahme angebunden werden kann. Dazu ist die Förderrichtung umkehrbar und die Vorrichtung wahlweise im Normalbetrieb (Fördern von "links" nach "rechts"; wobei die beiden Begriffe hier nicht wörtlich zu verstehen sind) oder im Umkehrbetrieb (Fördern von "rechts" nach "links") betreibbar. Auf diese Weise kann die Vorrichtung, je nach den räumlichen Verhältnissen im produzierenden Betrieb, der nach einer Falzmaschine platziert werden, dass der Roboter in Förderrichtung gesehen auf der einen oder anderen Seite des Fördermittels vorhanden ist und die Stapel auf der jeweiligen Seite auf Paletten absetzt.

Im "Stackstar C" ist der Einlaufbereich und der Kontrollentnahmebereich jeweils mit einem Tunnel versehen. In jedem der beiden Tunnel ist ein seitliches Anlageblech für die Stapel vorhanden. Die Steuerung der Vorrichtung und insbesondere des Roboters erfordert, dass die Stapel stets in der Flucht eines Anlageblechs gefördert werden. Ist dies gegeben, so kann der Roboter die Stapel an einer definierten Abnahmeposition fehlerfrei aufnehmen. Beim Positionieren der Vorrichtung relativ zur Falzmaschine ist daher darauf zu achten, dass das Anlageblech mit der jeweiligen Auslage der Falzmaschine korrespondiert, wobei es Falzmaschinen gibt die in Auslage Transportrichtung rechts, mittig oder links auslegen. Für den Bediener besteht somit ein hoher Aufwand und zugleich eine beträchtliche Fehlerquelle beim Positionieren der Vorrichtung relativ zur Falzmaschine. Auch bei der Kontrollentnahme von Stapeln und beim wieder einlegen der Stapel muss der Bediener auf die korrekte Position der Stapel in Querrichtung achten, was ebenfalls zu Fehlern führen kann.

Außerhalb des Bereichs der Druckweiterverarbeitung offenbart die DE 20 2023 106 0 U1 ein Fördermittel, zum Beispiel ein Förderband, für Gegenstände, insbesondere für Flaschen, mit einem Sensor, welcher zum Erfassen der auf dem Fördermittel transportierten Gegenstände ausgebildet ist. Dabei ist der Sensor bevorzugt seitlich zum Fördermittel angeordnet, sodass Strahlung (Licht oder Ultraschall) des Sensors auf Seitenflächen der Gegenstände auftrifft. Der Sensor kann als Distanzsensor ausgebildet sein. Auf diese Weise kann der Füllgrad des Fördermittels mit Flaschen, zum Beispiel bei Staubildung, erfasst werden.

### Technische Aufgabe

Es ist gegenüber diesem Stand der Technik eine Aufgabe der vorliegenden Erfindung, eine Verbesserung gegenüber dem Stand der Technik zu schaffen, welche es insbesondere ermöglicht, Stapel übereinanderliegender Druckprodukte einem horizontalen Fördermittel fehlerfrei zuzuführen und von dem Fördermittel fehlerfrei abzuheben.

### Erfindungsgemäße Lösung der Aufgabe

Diese Aufgabe wird erfindungsgemäß durch ein Verfahren nach Anspruch 1 und ein System nach Anspruch 8 gelöst.

Vorteilhafte und daher bevorzugte Weiterbildungen der Erfindung ergeben sich aus den Unteransprüchen sowie aus der Beschreibung und den Zeichnungen.

Eine erfindungsgemäße Vorrichtung zum Fördern und Absetzen von Stapeln aus Falzprodukten, mit einem Fördermittel, welches aufeinander folgende Stapel von einer vorgeordneten Falzmaschine übernimmt und in eine horizontale Förderrichtung fördert, mit einem Roboter, welcher einen Roboterarm und einen daran angeordneten Greifer für die Stapel umfasst und welcher die Stapel nacheinander in einem Abhebebereich des Fördermittels einzeln greift, vom Fördermittel abhebt, zu einer Absetzposition bewegt und dort absetzt, und mit einem Rechner, welcher das Bewegen des Roboterarms und das Greifen des Greifers steuert, zeichnet sich dadurch aus, dass am Fördermittel ein distanzmessender erster Sensor in einem dem Abhebebereich vorgeordneten Einlaufbereich angeordnet ist, welcher im Normalbetrieb der Vorrichtung den Abstand jedes am ersten Sensor vorbei geförderten Stapels misst und damit die Stapelposition in Querrichtung zur Förderrichtung erfasst und diese an den Rechner übermittelt, und dass der Rechner das Bewegen des Roboterarms und das Greifen des Greifers unter Verwendung der jeweiligen Stapelposition derart anpasst, dass die Stapel an ihrer jeweiligen Stapelposition gegriffen und abgehoben werden.

Ein erfindungsgemäßes System aus einer Falzmaschine und einer im Stapelstrom nachgeordneten Vorrichtung nach einem der vorhergehenden Ansprüche, wobei die Falzmaschine einen Ausleger umfasst, welcher die Stapel in einer Auslegetransportrichtung ausgibt, zeichnet sich dadurch aus, dass die Vorrichtung - zum Übernehmen der Stapel vom Ausleger - mit ihrem Einlaufbereich frei in einer Querposition zur Auslegetransportrichtung zum Ausleger positionierbar und betreibbar ist.

### Vorteilhafte Ausbildungen und Wirkungen der Erfindung

Die Erfindung ermöglicht es in vorteilhafter Weise, Stapel übereinanderliegender Druckprodukte einem horizontalen Fördermittel fehlerfrei zuzuführen und von dem Fördermittel fehlerfrei abzuheben.

Die Erfindung kommt z.B. im Bereich der Auslage von Falzmaschinen zum Einsatz.

Die Erfindung erleichtert insbesondere den Einsatz von Vorrichtungen (ähnlich dem "Stackstar C") im wahlweisen Normal- oder Umkehrbetrieb, oft auch Rechts-Links-Betrieb genannt. Dabei können das Ausrichten als Ganzes vereinfacht und zeitraubende Nachjustierung vermieden werden. Anlagebleche für die Stapel können vorteilhafterweise entfallen, da diese aufgrund der vorhandenen Sensorik nicht mehr erforderlich sind. Die Vorrichtung kann gegenüber einer Stapel ausgegebenen Maschine, wie zum Beispiel der Falzmaschine, grob (im Zentimeter- statt Millimeter-Bereich) ausgerichtet werden, solange sichergestellt bleibt, dass die Stapel von der Auslage der Falzmaschine in den Einlaufbereich der Vorrichtung gelangen. Auch das Einlegen kontrollierter Stapel kann grob erfolgen.

### Weiterbildungen der Erfindung

Im Folgenden werden bevorzugte Weiterbildungen der Erfindung (kurz: Weiterbildungen) beschrieben. Diese können - wo es sich nicht technisch ausschließt - auch untereinander kombiniert werden.

Eine Weiterbildung der Vorrichtung kann sich dadurch auszeichnen, dass das Fördermittel den Einlaufbereich, den Abhebebereich und einen Kontrollentnahmebereich umfasst und dass am Fördermittel ein zweiter distanzmessender Sensor in dem Kontrollentnahmebereich angeordnet ist. Beide Sensoren können auf gegenüberliegenden Seiten oder auf derselben Seite der Maschine angeordnet sein; es können auch vier Sensoren vorgesehen sein.

Eine Weiterbildung der Vorrichtung kann sich dadurch auszeichnen, dass im Normalbetrieb ein Stapel im Kontrollentnahmebereich zur Kontrolle entnommen und anschließend wieder eingelegt wird und dass der zweite Sensor den Abstand des wieder eingelegten und am zweiten Sensor vorbei geförderten Stapels misst und damit die Stapelposition quer zur Förderrichtung erfasst und diese an den Rechner übermittelt. Das Wiedereinlegen kann während des laufenden Betriebs des Fördermittels erfolgen. Dabei überwachen sowohl der erste Sensor als auch der zweite Sensor die an ihnen vorbei bewegten Stapel und die dabei gewonnenen Daten dienen der Ansteuerung des Roboterarms samt Greifer. Gegebenenfalls werden die Pufferbereiche dazu genutzt, Stapelkollisionen zu vermeiden und den Roboter bzw. den Abhebebereich kontinuierlich mit Stapeln zu versorgen.

Eine Weiterbildung der Vorrichtung kann sich dadurch auszeichnen, dass die Vorrichtung im Normalbetrieb und wahlweise in einem Umkehrbetrieb betreibbar ist, wobei im Umkehrbetrieb die Förderrichtung wenigstens abschnittsweise umkehrbar ist, der Einlaufbereich den Kontrollentnahmebereich bildet und der Kontrollentnahmebereich den Einlaufbereich bildet und wobei der zweite Sensor den Abstand jedes am zweiten Sensor vorbei geförderten Stapels misst und damit die Stapelposition quer zur Förderrichtung erfasst und diese an den Rechner übermittelt.

Eine Weiterbildung der Vorrichtung kann sich dadurch auszeichnen, dass die Vorrichtung mobil ausgebildet ist, zum Beispiel mit Rollen versehen ist, und entweder im Normalbetrieb mit dem Einlaufbereich oder im Umkehrbetrieb mit dem - den Einlaufbereich bildenden -Kontrollentnahmebereich zur Übernahme der Stapel positionierbar und betreibbar ist.

Eine Weiterbildung der Vorrichtung kann sich dadurch auszeichnen, dass im Umkehrbetrieb ein Stapel im - den Kontrollentnahmebereich bildenden - Einlaufbereich zur Kontrolle entnommen und anschließend wieder eingelegt wird und dass der erste Sensor den Abstand des am ersten Sensor vorbei geförderten, wieder eingelegten Stapels misst und damit die Stapelposition quer zur Förderrichtung erfasst und diese an den Rechner übermittelt.

Eine Weiterbildung der Vorrichtung kann sich dadurch auszeichnen, dass der erste Sensor einen ersten Erfassungsbereich aufweist, welcher derart in Querrichtung dimensioniert ist, dass Abstände von Stapeln messbar sind, welche in einem Bereich zwischen maximal linksseitiger Positionierung und maximal rechtsseitiger Positionierung auf dem Fördermittel in Förderrichtung gefördert werden. Entsprechendes gilt für den zweiten Sensor.

Eine Weiterbildung des Systems kann sich dadurch auszeichnen, dass die Falzmaschine und die nachgeordnete Vorrichtung stufenlos in der Querrichtung zueinander positionierbar und betreibbar sind. Solche Stufen müssten ansonsten zum Beispiel durch mechanische Koppelelemente gegeben sein; auf diese können jedoch vorteilhaft verzichtet werden.

Eine Weiterbildung des Systems kann sich dadurch auszeichnen, dass die Falzmaschine und die nachgeordnete Vorrichtung mechanisch ungekoppelt zueinander positionierbar und betreibbar sind.

Die in den obigen Abschnitten Technisches Gebiet, Erfindung und Weiterbildungen sowie im folgenden Abschnitt Ausführungsbeispiele offenbarten Merkmale und Merkmalskombinationen stellen - in beliebiger Kombination miteinander - weitere vorteilhafte Weiterbildungen der Erfindung dar.

### Ausführungsbeispiele zur Erfindung und Figuren

Die Figur 1 zeigt eine schematische, überblickartige Darstellung einer Draufsicht eines bevorzugten Ausführungsbeispiels der Erfindung und der Weiterbildungen.

Die Figur 2 zeigt ebenfalls eine schematische, detailliertere Darstellung einer Draufsicht des bevorzugten Ausführungsbeispiels der Erfindung und der Weiterbildungen.

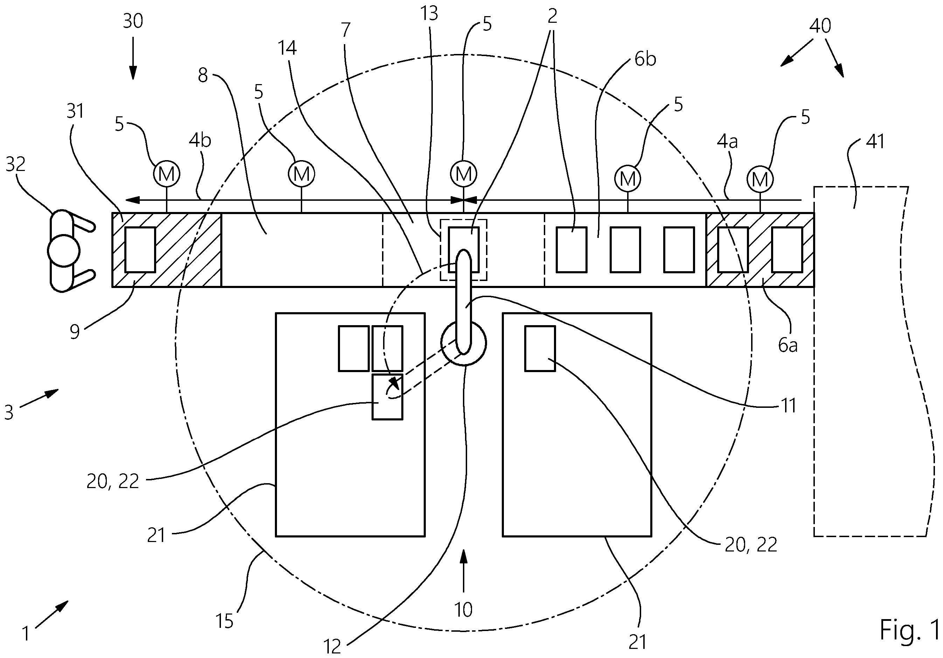

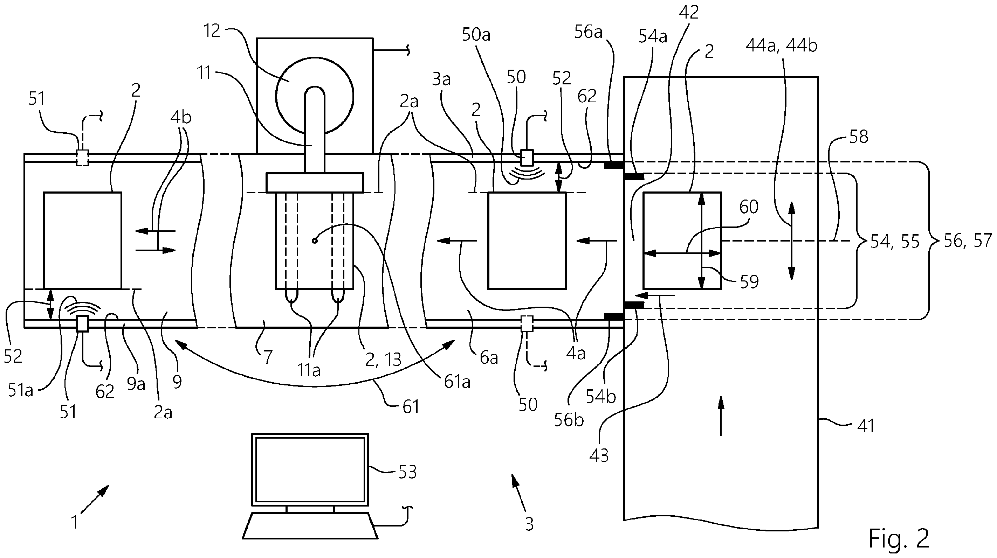

Die in den beiden Figuren 1 und 2 gezeigte Vorrichtung zum Fördern und Absetzen von Stapeln aus Falzprodukten (bzw. das aus einer Falzmaschine und einer im Stapelstrom nachgeordneten Vorrichtung) fördert einen Strom von Stapeln 2 bevorzugt aufeinanderliegender Falzprodukte, über ein horizontales und bevorzugt geradliniges Fördermittel 3, zum Beispiel einen Rollentisch, in eine Förderrichtung 4a (in der Figur beispielhaft nach links). Hierzu umfasst die Vorrichtung 1 bevorzugt mehrere Antriebe 5, zum Beispiel Elektromotoren. Der Bereich des Fördermittels 3 ist in mehrere, aufeinanderfolgende Abschnitte gegliedert, bevorzugt fünf Abschnitte. Ein erster Abschnitt 6a ist ein geschützter Bereich, ebenso wie ein fünfter Abschnitt 9; beide Abschnitte können zum Beispiel mit einem Gehäuse (einer Art Tunnel) versehen sein, welches verhindert, dass Stapel 2 von der Längsseite oder von oben entnommen werden können. Dazwischen liegen drei Abschnitte: ein zweiter Abschnitt 6b, welcher ein ungeschützter Bereich ist (also ohne Gehäuse/Tunnel) und welcher als Pufferbereich für Stapel 2 dienen kann; ein dritter Abschnitt 7, welcher ein ungeschützter (Abhebe-) Bereich ist und in welchem der Zugriff auf die Stapel 2 und deren Entnahme/Abheben durch einen Roboter 10 möglich ist; und ein vierter Bereich 8, welcher wie der zweite Bereich gestaltet ist. Jeder Bereich kann separat von einem jeweiligen Motor 5 angetrieben sein.

Ein Roboter 10 mit einer bevorzugt (auf einem Boden der Produktionsstätte) mobilen Roboterbasis 12 und einem frei im Raum beweglichen Roboterarm 11, zum Beispiel einen Gelenkarm mit einer Mehrzahl an Gelenken, ergreift die Stapel 2 bevorzugt im Bereich des dritten Abschnitts 7 mit einem (nicht dargestellten) Greifer und hebt die Stapel 2 an einer Abhebeposition 13 von dem Fördermittel 3 ab. Der Roboterarm 11 bewegt die Stapel 2 dann durch eine räumliche Bewegung 14 innerhalb eines Gefahrenbereichs 15 (dieser ist durch die maximale Bewegung des Roboterarms definiert) zu wenigstens einer Absetzposition 20 und einer dort angeordneten Palette 21. Der Roboterarm 11 setzt den Stapel 2 auf der Palette 21 gemäß einem vorgegebenen Absetzschema ab. Mehrere solcher abgesetzter Stapel 22 bilden nebeneinander- und übereinanderliegend sukzessive einen Palettenstapel.

Ein Stapel 2, welcher (zunächst) nicht abgehoben und abgesetzt werden soll, sondern welcher kontrolliert werden soll, wird vom dritten Abschnitt 7 entlang des vierten Abschnitts 8 bis zu einem fünften Abschnitt 9 des Fördermittels 3 gefördert. Der fünfte Abschnitt 9 bildet einen Kontrollentnahmebereich. Der dort angekommene Stapel 2 kann an einer Kontrollentnahmeposition 30 als zu kontrollierender Stapel 31 von einem Bediener 32 vom Ende des Fördermittels 3 her entnommen und kontrolliert werden. Auch eine Entnahme durch einen weiteren Roboter ist möglich. Die Kontrolle kann direkt an der Kontrollentnahmeposition 30 erfolgen oder an einer weiteren (nicht dargestellten) Position. Der fünfte Abschnitt 9 kann alternativ ohne eigenen Antrieb 5 vorgesehen sein, z.B. als ein Entnahmetisch.

Nach der Kontrolle des Stapels 31 durch den Bediener 32 kann der Stapel 31 an der Kontrollentnahmeposition 30 bzw. im fünften Abschnitt 9 wieder auf das Fördermittel 3 aufgelegt werden. Von dort kann der Stapel 31 wieder zurück in den dritten Abschnitt 7 gefördert werden. Hierzu ist eine Förderrichtung 4b wenigstens im fünften Abschnitt 9 und im vierten Abschnitt 8 und bevorzugt auch im dritten Abschnitt 7 umkehrbar (in der Figur beispielhaft von links nach rechts). Dabei können die einzelnen Abschnitte 6a bis 9 Relativgeschwindigkeiten zueinander aufweisen. Der kontrollierte Stapel 31 kann dann als ein weiterer Stapel 2 zur Abhebeposition 13 zurück gefördert werden, dort in den Strom aus Richtung 4a kommender Stapel 2 eingeschleust werden und dort vom Roboter 10 abgehoben und auf einer Palette 21 abgesetzt werden. Das Wiedereinschleusen in den Strom von Stapeln 2 kann von einer (nicht dargestellten) Steuerung der Vorrichtung 1 vorgenommen werden. Es kann zum Beispiel vorgesehen sein, dass an der Kontrollentnahmeposition 30 ein (nicht dargestellter) Betätigungsknopf vorgesehen ist. Der Bediener 32 kann diesen Knopf betätigen, wenn er einen Stapel 31 zu Kontrollzwecken entnehmen möchte, und der kann diesen Knopf wieder betätigen, wenn er den Stapel 31 zurück einschleusen möchte. Das Ausschleusen und das Einschleusen übernimmt dann jeweils die Steuerung. Die Steuerung kann dabei auch dafür sorgen, dass das Fördern des Stroms von Stapeln 2 in Richtung 4a soweit möglich unterbrechungsfrei weiterläuft. Anstelle eines Betätigungsknopf kann auch ein Sensor oder können auch mehrere Sensoren vorgesehen sein, welche/-r automatisch erkennt/erkennen, dass ein Stapel 31 nach der Kontrolle wieder aufgelegt wird und somit zurückgefördert werden soll.

Die beiden Figuren 1 und 2 zeigen auch ein System 40 umfassend die Vorrichtung 1 und eine Falzmaschine 41. Der Roboter 10 ist dabei auf einer Längsseite 4c des Fördermittels 3 angeordnet. Die Kontrollentnahmeposition 30 ist am Ende des Fördermittels 3 angeordnet.

In Figur 2 ist ein erster Sensor 50, im ersten Abschnitt 6a bzw. im Einlaufbereich 6a, mit einem ersten Erfassungsbereich 50a zum Erfassen einzelner Stapel 2 eines Stapelstromes dargestellt. Es ist auch ein zweiter Sensor 51, im fünften Abschnitt 9 bzw. im Kontrollentnahmebereich 9, mit einem zweiten Erfassungsbereich 51a zum Erfassen kontrollierter und wieder eingelegter Stapel dargestellt. Das distanzmessende Erfassen kann jeweils zum Beispiel optisch mit Licht oder mit Ultraschall erfolgen. Die Sensoren 50 und 51 können wie dargestellt auf gegenüberliegenden Seiten des Fördermittels 3 ortsfest angeordnet sein, alternativ können Sie auch auf derselben Seite angeordnet sein. Jeder der beiden Sensoren 50 und 51 ist dazu ausgelegt, einen Abstand 52 zwischen einem am Sensor vorbei bewegten Stapel 2, bevorzugt dessen dem Sensor zugewandten Seitenfläche 2a, und einer Referenz 62, z.B. einer Innenfläche des Tunnels 9a, zu messen. Der jeweils erhaltene Messwert für den Abstand 52 wird über die dargestellten Verbindungen an einen Rechner 53 übertragen, welcher den Roboter 10, d. h. die Bewegungen des Roboterarms 11 und das Öffnen und Schließen des Greifers 11a, ansteuert.

Die Vorrichtung 1 ist benachbart zu einer Falzmaschine 41 bzw. deren Ausleger 42 angeordnet, wobei ein Bereich 54, in welchem die Stapel aus der Falzmaschine 41 in einer Auslegetransportrichtung 43 ausgeschleust werden, und ein Bereich 56, in welchen die Stapel in die Vorrichtung 1 eingeschleust werden, eine für die Stapelübergabe ausreichende Überdeckung aufweisen. Der Bereich 54 weist eine rechte Grenze 54a, eine linke Grenze 54b und eine Breite 55 auf, während der Bereich 56 eine rechte Grenze 56 a, eine linke Grenze 56b und eine Breite 57 aufweist (jeweils bezüglich der Förderrichtung 4a). Dabei ist die Vorrichtung 1 in Querrichtung 44a zur Förderrichtung 4a frei, insbesondere stufenlos, in einer Querposition 44b relativ zur Falzmaschine 41 positionierbar. Es muss lediglich sichergestellt sein, dass die Stapel 2 vom Bereich 54 kollisionsfrei in den Bereich 56 gefördert werden. Eine mechanische Kopplung zwischen der Vorrichtung 1 und der Falzmaschine 41 für ein präzises Positionieren im Millimeterbereich braucht nicht vorhanden zu sein. Es ist auch nicht erforderlich, dass die Stapel 2 bezüglich einer Mittellinie 58 oder bezüglich der jeweiligen rechten oder linken Grenze 54a, 54b, 56a oder 56b (linksbündig oder rechtsbündig) ausgerichtet sind. Durch das Vorsehen des Sensors 50 für den Normalbetrieb und des Sensors 51 für den Umkehrbetrieb können die Stapel 2 in jeder Quer-Positionierung, d.h. quer zur Förderrichtung 4a erfasst werden und in dieser Positionierung mittels des Roboters 10 vom Fördermittel 3 abgehoben werden. Auch die Breite 59 des Stapels 2 oder die Länge 60 des Stapels 2 spielt keine wesentliche Rolle, lediglich die sensorisch erfasste Quer-Positionierung der Stapel-Seitenfläche 2a.

Figur 2 zeigt die Vorrichtung 1 im Normalbetrieb. Wenn es die räumlichen Gegebenheiten im produzierenden Betrieb erforderlich machen, kann ein Wechsel 61 erfolgen, wobei die Vorrichtung 1 in der Horizontalebene um einen Drehpunkt 61a gedreht wird und dabei vom Normalbetrieb in den Umkehrbetrieb wechselt bzw. umgeschaltet wird. Bei diesem Wechsel wird insbesondere auch die Förderrichtung 4a umgekehrt und die Sensoren 50 und 51 tauschen ihre Funktion. Im dargestellten Normalbetrieb würden die zu beladenden Paletten in Förderrichtung 4a betrachtet rechts vom Fördermittel 3 platziert sein; dagegen im Umkehrbetrieb links vom Fördermittel 3. Ein solcher Wechsel kann z.B. vorgenommen werden, wenn die Vorrichtung 1 mobil ausgebildet ist und je nach Bedarf zu verschiedenen Falzmaschinen 41 bewegt wird und dort eingesetzt wird.

### Bezugszeichenliste

- 1: Vorrichtung
- 2: Stapel
- 2a: Stapel-Seitenfläche
- 3: Fördermittel
- 3a: Tunnel
- 4a: Förderrichtung
- 4b: umkehrbare Förderrichtung
- 4c: Längsseite
- 5: Antrieb/-e
- 6a: erster Abschnitt, geschützter Bereich, Einlaufbereich
- 6b: zweiter Abschnitt, ungeschützter Bereich, Pufferbereich
- 7: dritter Abschnitt, ungeschützter Bereich, Abhebebereich
- 8: vierter Abschnitt, ungeschützter Bereich, Pufferbereich
- 9: fünfter Abschnitt, geschützter Bereich, Kontrollentnahmebereich
- 9a: Tunnel
- 10: Roboter
- 11: Roboterarm
- 11a: Greifer
- 12: Roboterbasis
- 13: Abhebeposition
- 14: Bewegung
- 15: Gefahrenbereich
- 20: Absetzposition/-en
- 21: Palette/-n
- 22: abgesetzte Stapel
- 30: Kontrollentnahmeposition
- 31: zu kontrollierender Stapel
- 32: Bediener
- 40: System
- 41: Falzmaschine
- 42: Ausleger der Falzmaschine
- 43: Auslegetransportrichtung
- 44a: Querrichtung
- 44b: Querposition
- 50: erster Sensor
- 50a: erster Erfassungsbereich des ersten Sensors
- 51: zweiter Sensor
- 51a: zweiter Erfassungsbereich des zweiten Sensors
- 52: (gemessener) Abstand
- 53: Rechner
- 54: Bereich der Ausschleusung
- 54a: rechte Grenze des Bereichs der Ausschleusung
- 54b: linke Grenze des Bereichs der Ausschleusung
- 55: Breite der Ausschleusung
- 56: Bereich der Einschleusung
- 56a: rechte Grenze des Bereichs der Einschleusung
- 56b: linke Grenze des Bereichs der Einschleusung
- 57: Breite der Einschleusung
- 58: Mittellinie
- 59: Breite des Stapels
- 60: Länge des Stapels
- 61: Wechsel zwischen Normalbetrieb und Umkehrbetrieb
- 61a: Drehpunkt für den Wechsel
- 62: Referenz (-linie, -fläche)

## Patentansprüche

1. Vorrichtung zum Fördern und Absetzen von Stapeln aus Falzprodukten, mit einem Fördermittel (3), welches aufeinander folgende Stapel (2) von einer vorgeordneten Falzmaschine (41) übernimmt und in eine horizontale Förderrichtung (4a) fördert, mit einem Roboter (10), welcher einen Roboterarm (11) und einen daran angeordneten Greifer (11a) für die Stapel (2) umfasst und welcher die Stapel (2) nacheinander in einem Abhebebereich (7) des Fördermittels (3) einzeln greift, vom Fördermittel (3) abhebt, zu einer Absetzposition (20) bewegt und dort absetzt, und mit einem Rechner (53), welcher das Bewegen des Roboterarms (11) und das Greifen des Greifers (11a) steuert,
**dadurch gekennzeichnet,**
**dass** am Fördermittel (3) ein distanzmessender erster Sensor (50) in einem dem Abhebebereich (7) vorgeordneten Einlaufbereich (6a) angeordnet ist, welcher im Normalbetrieb der Vorrichtung (1) den Abstand (52) jedes am ersten Sensor (50) vorbei geförderten Stapels (2) misst und damit die Stapelposition in Querrichtung zur Förderrichtung (4a) erfasst und diese an den Rechner (53) übermittelt, und dass der Rechner (53) das Bewegen des Roboterarms (11) und das Greifen des Greifers (11a) unter Verwendung der jeweiligen Stapelposition derart anpasst, dass die Stapel (2) an ihrer jeweiligen Stapelposition gegriffen und abgehoben werden.

2. Vorrichtung nach Anspruch 1,
**dadurch gekennzeichnet,**
**dass** das Fördermittel (3) den Einlaufbereich (6a), den Abhebebereich (7) und einen Kontrollentnahmebereich (9) umfasst und dass am Fördermittel (3) ein zweiter distanzmessender Sensor (51) in dem Kontrollentnahmebereich (9) angeordnet ist.

3. Vorrichtung nach Anspruch 1 oder 2,
**dadurch gekennzeichnet,**
**dass** im Normalbetrieb ein Stapel (2) im Kontrollentnahmebereich (9) zur Kontrolle entnommen und anschließend wieder eingelegt wird und dass der zweite Sensor (51) den Abstand (52) des wieder eingelegten und am zweiten Sensor (51) vorbei geförderten Stapels (2) misst und damit die Stapelposition quer zur Förderrichtung erfasst und diese an den Rechner (53) übermittelt.

4. Vorrichtung nach einem der vorhergehenden Ansprüche,
**dadurch gekennzeichnet,**
**dass** die Vorrichtung (1) im Normalbetrieb und wahlweise in einem Umkehrbetrieb betreibbar ist, wobei im Umkehrbetrieb die Förderrichtung (4a) umkehrbar ist, der Einlaufbereich (6a) den Kontrollentnahmebereich (9) bildet und der Kontrollentnahmebereich (9) den Einlaufbereich (6a) bildet und wobei der zweite Sensor (51) den Abstand jedes am zweiten Sensor (51) vorbei geförderten Stapels (2) misst und damit die Stapelposition quer zur Förderrichtung erfasst und diese an den Rechner (53) übermittelt.

5. Vorrichtung nach Anspruch 4,
**dadurch gekennzeichnet,**
**dass** die Vorrichtung (1) mobil ausgebildet ist und entweder im Normalbetrieb mit dem Einlaufbereich (6a) oder im Umkehrbetrieb mit dem - den Einlaufbereich (6a) bildenden - Kontrollentnahmebereich (9) zur Übernahme der Stapel (2) positionierbar und betreibbar ist.

6. Vorrichtung einem der vorhergehenden Ansprüche 4 oder 5,
**dadurch gekennzeichnet,**
**dass** im Umkehrbetrieb ein Stapel (2) im - den Kontrollentnahmebereich (9) bildenden - Einlaufbereich (6a) zur Kontrolle entnommen und anschließend wieder eingelegt wird und dass der erste Sensor (50) den Abstand (52) des am ersten Sensor (50) vorbei geförderten, wieder eingelegten Stapels (2) misst und damit die Stapelposition quer zur Förderrichtung (4a) erfasst und diese an den Rechner (53) übermittelt.

7. Vorrichtung einem der vorhergehenden Ansprüche,
**dadurch gekennzeichnet,**
**dass** der erste Sensor (50) einen ersten Erfassungsbereich (50a) aufweist, welcher derart in Querrichtung dimensioniert ist, dass Abstände (52) von Stapeln (2) messbar sind, welche in einem Bereich zwischen maximal linksseitiger Positionierung (56b) und maximal rechtsseitiger Positionierung (56a) auf dem Fördermittel (3) in Förderrichtung (4a) gefördert werden.

8. System aus einer Falzmaschine und einer im Stapelstrom nachgeordneten Vorrichtung nach einem der vorhergehenden Ansprüche, wobei die Falzmaschine (41) einen Ausleger (42) umfasst, welcher die Stapel (2) in einer Auslegetransportrichtung (43) ausgibt,
**dadurch gekennzeichnet,**
**dass** die Vorrichtung (1) - zum Übernehmen der Stapel (2) vom Ausleger (42) - mit ihrem Einlaufbereich (6a) frei in einer Querposition (44b) zur Auslegetransportrichtung (43) zum Ausleger (42) positionierbar und betreibbar ist.

9. System einem Anspruch 8,
**dadurch gekennzeichnet,**
**dass** die Falzmaschine (41) und die nachgeordnete Vorrichtung (1) stufenlos in der Querrichtung (44a) zueinander positionierbar und betreibbar sind.

10. System einem Anspruch 9,
**dadurch gekennzeichnet,**
**dass** die Falzmaschine (41) und die nachgeordnete Vorrichtung (1) mechanisch ungekoppelt zueinander positionierbar und betreibbar sind.
